# EUROPEAN PATENT SPECIFICATION

(11) **EP 1 615 496 B1**
(45) Date of publication and mention of the grant of the patent: **24.09.2008**
(21) Application number: 04725413.1
(22) Date of filing: 02.04.2004
(51) Int. Cl.: A01M 7/00

(54) **CROP SPRAYING APPARATUS**
LANDWIRTSCHAFTLICHE FELDSPRITZE
PULVERISATEUR DE RECOLTE

(30) Priority: 12.04.2003 GB 0308507
(43) Date of publication of application: 18.01.2006
(73) Proprietor: Knight, Brian George, Oakham Rutland LE15 8NF (GB)
(72) Inventor: Knight, Brian George, Oakham Rutland LE15 8NF (GB)
(74) Representative: Gwilt, Julia Louise
(86) International application number: PCT/GB2004/001460
(87) International publication number: WO 2004/089077

(56) References cited:
- GB-A- 2 038 153
- US-A- 5 927 606
- US-A- 6 053 419

## Description

### TECHNICAL FIELD

The invention relates to agricultural crop spraying apparatus.

### BACKGROUND ART

It is known to protect crop sprayer booms by a break-away device that operates to protect the boom from damage when the boom strikes an obstacle. Typically such breakaway devices consist of a short section of boom approximately 10% of the total boom width, at each end of the boom, and held in the working position by spring means. This arrangement allows the end sections of the boom to deflect if and when they encounter an obstacle.

Wide spray booms are designed to fold in several places and can therefore operate at different widths. The conventional breakaway device only works at the maximum boom width, so that the boom is unprotected when working at reduced widths. Attempts have been made to improve this situation by adding relief valves and/or an accumulator to the hydraulic cylinders or rams that cause the boom to fold and unfold. Unfortunately, in operation when turning the sprayer at headlands, the load on these cylinders can often exceed the relief valve pressure necessary to guarantee the boom will deflect when an obstacle or obstruction is encountered, so that the boom folds unintentionally.

US-A-6,053,419 of Case Corporation discloses an agricultural crop spraying apparatus comprising a spray boom consisting of a plurality of boom sections which are hinged together to be foldable and extendable, double-acting hydraulic rams controlling the folding and extension of the boom sections, latch means further controlling folding of the boom sections and sensing means disposed along an outboard portion of the front edge of the boom to sense contact with an obstruction.

US-A-5,927,606 of MacDon Industries Ltd discloses an agricultural crop spraying apparatus comprising a spray boom consisting of a plurality of boom sections which are hinged together to be foldable and extendable, double acting hydraulic rams controlling the folding and extension of the boom sections, latch means further controlling folding of the boom sections and sensing means disposed along an outboard portion of the front edge of the boom to sense contact with an obstruction.

### DISCLOSURES OF INVENTION

According to the invention there is provided agricultural crop spraying apparatus according to claim 1.

The latch means may be hydraulically actuated.

The sensing means may be non-mechanical, eg in the form of an optical or infra-red sensor.

Alternatively the sensing means may comprise a cable stretched along the front of the boom. The cable may be arranged to operate the latch means directly.

The sensing means may comprise a rail hinged to the front of each second boom section, the rail being arranged to deflect on contact with an obstacle.

In practice, the spray boom may comprise a pair of boom sections outboard of the boom and provided with the conventional break-away protection discussed above.

It will be appreciated that the spray apparatus of the present invention may be used otherwise than in relation to agricultural crop spraying, eg to apply a herbicide to industrial land.

### BRIEF DESCRIPTION OF DRAWINGS

The invention is diagrammatically illustrated, by way of example, in the accompanying drawings, in which:-
Figure 1 is a partial perspective view of one half of a spray boom for an agricultural crop spray apparatus;
Figure 2 is a front view of the boom half of Figure 1;
Figure 3 is a front view of the boom half of Figure 1, with a third boom section folded, and
Figure 4 is a circuit diagram.

### BEST MODE FOR CARRYING OUT THE INVENTION

The drawings show one half of a 36 metre spray boom 1 for agricultural crop spraying apparatus (not shown), which will normally be mounted on an agricultural tractor.

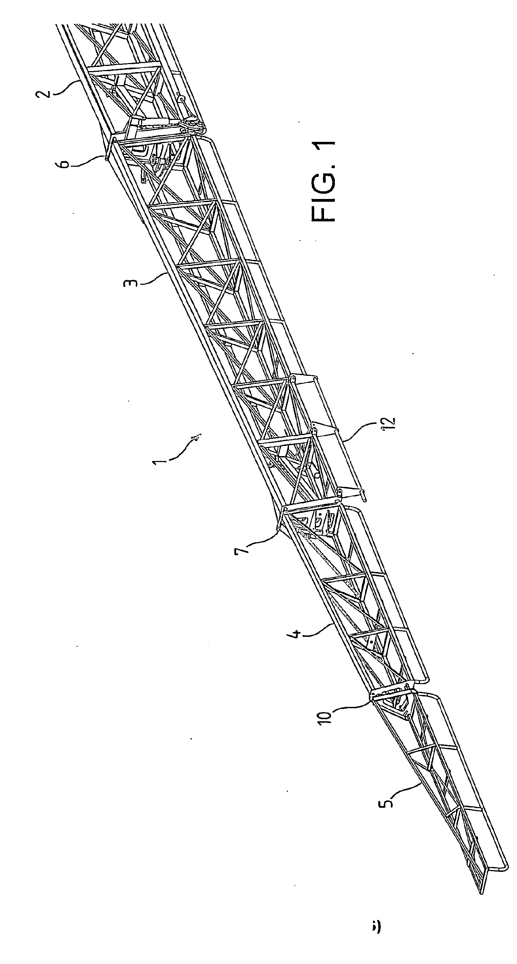

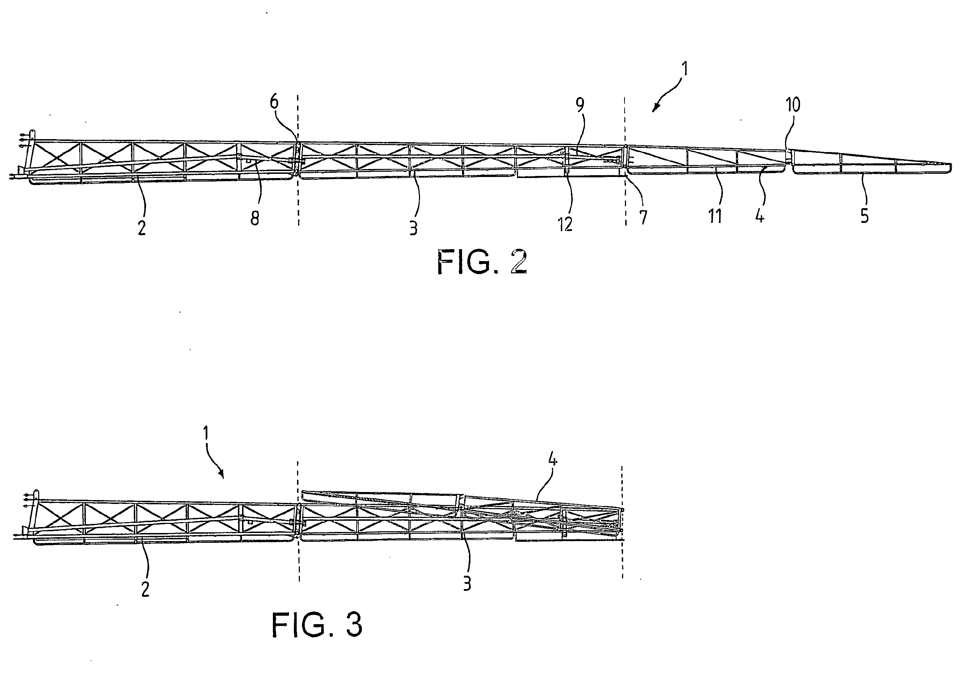

The spray boom half comprises three boom sections 2,3,4, namely a first or inner section 2, a second or outer section 3 and a third or outermost section 4, the three boom sections being pivoted together at hinges 6,7 so that they can be extended into a fully extended operative position shown in Figures 1 and 2 and partly folded into an operative position as shown in Figure 3, where the third or outermost section 4 is folded to lie against the second section 3. In this partly folded condition, the spray boom can operate over a width of 24 metres. The spray boom can also be folded so that the second and third boom sections lie against the first boom section to operate over a width of 12 metres and can be completely folded in generally conventional fashion (not shown) for transportation and storage.

Double-acting hydraulic rams 8,9 are coupled between the respective boom sections to hold the boom sections extended and to hold them in the folded condition and also to move the boom sections between the folded and extended conditions under the control of the operator of the spray apparatus.

The third or outermost boom section 4 is provided with a conventional break-away protection against contact with an obstacle. Thus the outermost boom section comprises a tip portion 5, which is substantially half the length of the outermost section, and which is pivoted to the inboard part 11 of the outermost boom section at hinge 10. The tip portion 5 is held extended by spring means, not shown.

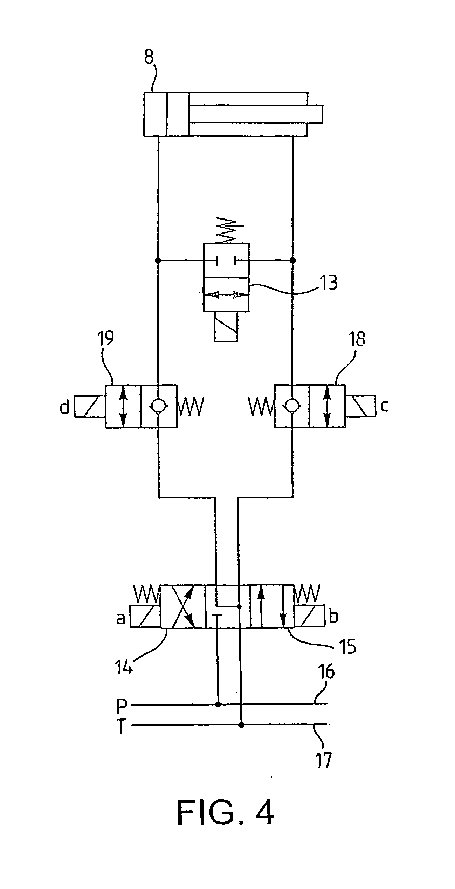

When such a spray apparatus is operated at the 24 metre width, that is with the outermost boom sections folded as shown in Figure 3, the conventional break-away protection is thus inoperative, and the present invention provides additional break-away protection to protect the second spray boom sections, although such additional break-away protection could be used to protect the boom when working at 12 metres width as well. A sensing rail 12 is positioned along a portion of the front of each second boom section 3 for approximately 2 metres from its outer end. The sensing rail is hinged to the boom section to deflect when it contacts an obstacle, or if the boom is caught by the crop. The rail operates an electric trip switch, not shown, of any convenient kind and which operates hydraulic valves 13, 18 and 19, see Figure 4, to release the pressure in the double acting hydraulic folding cylinders or rams 8 controlling the hinge 6. This is achieved by connecting both ports of each ram or cylinder 8 together and also to an open tank line to compensate for variation in volume across the cylinder, see below with reference to Figure 4.

If desired, when the boom is operated at full extension, i.e. 36 metres, the deflection of the tip portion 5 could operate the hydraulic break-away boom protection herein described.

An hydraulic circuit diagram for the spray apparatus is shown in Figure 4. The circuit comprises the double-acting ram 8 that is fed with hydraulic fluid from a pump line 16, the circuit also comprising a return line 17. A conventional double acting solenoid valve having opposed solenoids 14,15 control the double-acting hydraulic ram 8 to fold and unfold the boom sections, and are activated by a boom fold/unfold switch or lever, not shown, under the control of the operator of the spray apparatus. The circuit is also controlled by a break-away valve 13 under the control of the sensing switch, which allows the ram to float and thus to fold when an obstacle is encountered. The sensing switch at the same time actuates hydraulic valves 18,19 in the circuit to open the tank line, as mentioned above. The operational sequence of the various hydraulic valves in the circuit is set-out below.

### Operational Sequence

| | Solenoid Status | | | | |
|---|---|---|---|---|---|
| Function | a | b | c | d | e |
| Cylinder extension | On | On | On | Off | Off |
| Cylinder retraction | On | On | On | On | Off |
| Cylinder float | Off | Off | On | On | On |
| Cylinder locked | Off | Off | Off | Off | Off |

If desired, in a modification, the break-away device of the present invention could operate to fold the boom halves at their innermost hinges at their inner ends. Normally these innermost hinges fold in the opposite sense to the hinges 6,7 and 10, that is forwards rather than backwards. This innermost hinge could however be formed as a double hinge with the normal hinge action controlled by a normal folding cylinder or ram and the backwards hinging controlled by an additional, break-away ram actuated by the sensing rail 12 and/or the hinging of the tip portion 5, as described above.

The invention thus provides additional break-away protection for a spray boom.

## Claims

1. Agricultural crop spraying apparatus comprising a spray boom (1) consisting of a plurality of boom sections (2,3,4) which are hinged together to be foldable and extendable, double-acting hydraulic rams (8,9) controlling the folding and extension of the boom sections, latch means further controlling folding of the boom sections, and sensing means (12) disposed along at least an outboard portion of the front edge of the boom to sense contact with an obstacle, **characterised by** the sensing means (12) being coupled to the latch means to allow folding of the boom sections when an obstacle is sensed, a hydraulic valve (13) in a circuit controlling the hydraulic rams and a trip switch controlling the operation of the valve, the arrangement being such that the trip switch is operated when the sensing means (12) senses an obstacle to cause the hydraulic valve to allow the boom sections to fold.

2. Agricultural crop spraying apparatus according to claim 1, wherein the latch means is hydraulically actuated.

3. Agricultural crop spraying apparatus according to claim 1 or claim 2, wherein the sensing means is non-mechanical.

4. Agricultural crop spraying apparatus according to claim 1 or claim 2, wherein the sensing means comprises a cable stretched along the front of the boom.

5. An agricultural crop spraying apparatus according to claim 1 or claim 2, wherein the sensing means (12) comprises a rail hinged to the front of a boom section, the rail being arranged to deflect on contact with an obstacle.

## Patentansprüche

1. Landwirtschaftliche Pflanzensprühvorrichtung mit einem Sprühausleger (1) bestehend aus einer Mehrzahl von Auslegerabschnitten (2, 3, 4), die drehbar miteinander verbunden sind, um ein- und ausklappbar zu sein, doppeltwirkenden Hydraulikzylindern (8, 9), die das Ein- und Ausklappen der Auslegerabschnitte steuern, Sperrmitteln, die ferner das Einklappen der Auslegerabschnitte steuern, und Sensiermitteln (12), die entlang mindestens eines außenseitigen Abschnitts der Vorderkante des Auslegers angeordnet sind, um einen Kontakt mit einem Hindernis zu erfassen, **dadurch gekennzeichnet, dass** die Sensiermittel (12) mit den Sperrmitteln gekoppelt sind, um ein Einklappen der Auslegerabschnitte zu ermöglichen, wenn ein Hindernis erfasst wird, wobei ein Hydraulikventil (13) in einer Schaltung die Hydraulikzylinder steuert und ein Auslöseschalter den Betrieb des Ventils steuert, wobei die Anordnung derart ist, dass der Auslöseschalter betrieben wird, wenn die Sensiermittel (12) ein Hindernis erfassen, um das Hydraulikventil zu veranlassen, dass Einklappen der Auslegerabschnitte zu ermöglichen.

2. Landwirtschaftliche Pflanzensprühvorrichtung nach Anspruch 1,
bei der die Sperrmittel hydraulisch betätigt sind.

3. Landwirtschaftliche Pflanzensprühvorrichtung nach Anspruch 1 oder 2,
bei der die Sensiermittel nicht mechanisch sind.

4. Landwirtschaftliche Pflanzensprühvorrichtung nach Anspruch 1 oder Anspruch 2,
bei der die Sensiermittel ein Kabel aufweisen, welches entlang der Vorderseite des Auslegers gespannt Ist.

5. Landwirtschaftliche Pflanzensprühvorrichtung nach Anspruch 1 oder Anspruch 2,
bei der die Sensiermittel (12) eine Schiene aufweisen, die an der Vorderseite eines Auslegerabschnitts angelenkt ist, wobei die Schiene dazu eingerichtet ist, bei Kontakt mit einem Hindernis ausgelenkt zu werden.

## Revendications

1. Appareil pour la pulvérisation de récoltes agricoles comprenant une rampe de pulvérisation (1) consistent en une pluralité de sections de rampe (2, 3, 4) qui sont articulées entre elles de façon à pouvoir se plier et s'étendre, des vérins hydrauliques à double action (8, s) commandant le pliage et l'extension des sections de rampe, des moyens de verrouillage commandant de plus le pliage des sections de rampe et les moyens de détection (12) disposée le long d'au moins une portion extérieure du bord avant de la flèche captant le contact avec un obstacle,
**caractérisé en ce que** les moyens de détection (12) sont couplés aux moyens de verrouillage pour permettre le pliage des sections de rampe lorsqu'un obstacle est détecté, une soupape hydraulique (13) dans un circuit commandant les vérins hydrauliques et un commutateur de déclenchement commandant le fonctionnement de la soupape, l'agencement étant tel que le commutateur de déclenchement est actionné lorsque les moyens de détection (12) détectent un obstacle faisant en sorte que la soupape hydraulique permet aux sections de rampe de se plier.

2. Appareil pour la pulvérisation de récoltes agricoles selon la revendication 1, dans lequel les moyens de verrouillage sont actionnés hydrauliquement.

3. Appareil pour la pulvérisation de récoltes agricoles selon la revendication 1 ou la revendication 2, dans lequel les moyens de détection ne sont pas mécaniques.

4. Appareil pour la pulvérisation de récoltes agricoles selon la revendication 1 ou la revendication 2, dans lequel les moyens de détection comprennent un câble s'étendant le long de l'avant de la rampe.

5. Appareil pour la pulvérisation de récoltes agricoles selon la revendication 1 ou la revendication 2, dans lequel les moyens de détection (12) comprennent un rail articulé sur l'avant d_{'}une section de rampe, le rail étant disposé de façon à fléchir lors d'un contact avec un obstacle.
